# Europäisches Patentamt

## European Patent Office

## Office européen des brevets

(19)

(11) Numéro de publication: **0 103 519**
**B1**

(12) # FASCICULE DE BREVET EUROPEEN

(45) Date de publication du fascicule du brevet:
**27.08.86**

(51) Int. Cl.⁴: **B 64 F 1/22**

(21) Numéro de dépôt: **83401765.9**

(22) Date de dépôt: **08.09.83**

(54) **Dispositifs de manoeuvre d'hélicoptères sur le pont d'un navire.**

(30) Priorité: **13.09.82 FR 8215414**

(43) Date de publication de la demande:
**21.03.84 Bulletin 84/12**

(45) Mention de la délivrance du brevet:
**27.08.86 Bulletin 86/35**

(84) Etats contractants désignés:
**DE GB IT NL SE**

(56) Documents cités:
**FR - A - 1 463 788**
**FR - A - 2 234 190**
**FR - A - 2 462 341**
**US - A - 4 319 722**

(73) Titulaire: **AEROSPATIALE Société Nationale Industrielle,
37 boulevard de Montmorency, F-75781 Paris
Cédex 16 (FR)**

(72) Inventeur: **Bernard, Louis Arthur, 6 boulevard des
Oliviers, F-13700 Saint-Victoret Bouches-du-Rhône (FR)**

(74) Mandataire: **Lepeudry-Gautherat, Thérèse et al,
ARMENGAUD JEUNE CABINET
LEPEUDRY 23 boulevard de Strasbourg, F-75010 Paris
(FR)**

## Description

La présente invention concerne les dispositifs de manœuvre assurant le déplacement de charges ou d'engins supportés par des roues sur une plate-forme plane, entre au moins deux zones prédéterminées sur la plate-forme, et l'invention se rapporte plus particulièrement à des dispositifs de manœuvre d'un hélicoptère entre une aire d'appontage et de décollage, et une aire de remisage contigüe et, de préférence, protégée par un hangar, par exemple sur le pont d'un navire, de sorte que le déplacement de l'hélicoptère de l'une de ces aires à l'autre s'effectue en toute sécurité, sans rupture de la liaison entre l'hélicoptère et le pont du navire, même lorsque ce dernier navigue par gros temps.

De nos jours, de nombreux navires, en particulier les navires de guerre, de pêche industrielle, et d'exploration, notamment pétrolière, ainsi que de nombreuses barges et plates-formes de forage ou d'exploitation de champs pétroliers marins sont équipés d'un pont d'envol et d'une zone de garage adjacente, sur laquelle est éventuellement monté un hangar, et destinés à au moins un hélicoptère attaché à l'unité en question. Sur des navires de relativement faible tonnage, tels que les corvettes ou destroyers, l'aire d'appontage et de décollage ainsi que l'aire de remisage attenante, qui sont de surfaces très limitées, sont délimitées sur un pont à l'arrière du navire.

Afin de faciliter l'appontage, qui est l'opération la plus délicate et la plus difficile, notamment dans de mauvaises conditions atmosphériques, des dispositifs d'aide à l'appontage ont été mis au point, afin de diminuer les risques d'accident.

L'un de ces dispositifs, couramment utilisé, comporte une trappe qui s'ouvre sensiblement dans le pont du navire et dans laquelle deux mâchoires latérales sont actionnées par des organes de manœuvre généralement hydrauliques ou pneumatiques, afin de se refermer sur une sonde solidaire de l'hélicoptère et suspendue à la verticale sous ce dernier, lorsque cette sonde a pénétré dans la trappe, après la descente de l'hélicoptère vers le pont provoquée par la traction sur un câble d'appontage enroulé sur un treuil d'appontage, et dont l'extrémité a été préalablement accrochée à l'extrémité inférieure de la sonde.

Ce dispositif est utilisé de la manière suivante: pour apponter, l'hélicoptère se met en vol stationnaire par rapport au navire, au-dessus du pont de ce dernier. Dans cette configuration, comme la vitesse horizontale de l'hélicoptère par rapport à la mer est toujours faible, la sécurité impose que l'hélicoptère se déplace face au vent, et donc également le navire, qui doit de ce fait, prendre une «route aviation», et le plus souvent changer de cap pendant un temps suffisant pour l'appontage. De l'hélicoptère en vol stationnaire, un câble messager est descendu sur le pont du navire, et un crochet d'extrémité du câble d'appontage est accroché au câble messager, qui est ensuite remonté dans l'hélicoptère, afin que le crochet soit accroché à l'extrémité inférieure de la sonde. Cette sonde est ensuite suspendue sous le fuselage de l'hélicoptère tout en étant rigidement fixée à ce dernier, et le câble d'appontage, qui passe par un orifice central au fond de la trappe, le plus souvent délimitée par une ouverture circulaire, est ensuite enroulé sur le treuil d'appontage disposé sour le pont, de sorte que par une traction essentiellement verticale, l'hélicoptère est tiré vers le pont. Lorsque la sonde a pénétré dans l'ouverture de la trappe, les mâchoires se referment et enserrent la sonde entre elles, en retenant l'hélicoptère appliqué contre le pont, quels que soient les mouvements de ce dernier dûs au roulis et au tangage du navire, et quelle que soit la force du vent.

On constate que la séquence de ces différentes opérations d'appontage est relativement longue, et que le navire doit donc s'imposer un changement de cap et un déroulement pendant un temps non négligeable, ce qui peut ne pas être possible si le navire est à proximité des côtes, de rochers, etc., ou être dangereux si le navire est un navire de guerre ainsi contraint de quitter sa position au sein d'une flottille en ordre de combat, et de s'éloigner de cette flottille de sorte qu'il s'expose à des attaques sous-marines et aériennes et qu'il affaiblit le système de défense de la flottille. Pour ces raisons, ainsi qu'en raison de l'encombrement et de la complexité de la structure d'un tel dispositif sur et sous le pont d'un navire, de son coût et du coût des importantes modifications qu'il est nécessaire d'apporter aux superstructures du navire, un autre dispositif d'aide à l'appontage est de plus en plus souvent utilisé.

Ce second dispositif est un dispositif d'arrimage rapide de l'hélicoptère au pont par un harpon. Un harpon, transporté par l'hélicoptère, est projeté sensiblement verticalement dans une grille fermement fixée sur le pont du navire, lorsque l'hélicoptère touche le pont. Le harpon, qui est commandé hydrauliquement, s'engage et s'accroche dans cette grille, puis exerce par traction sur la grille une force de retenue de l'hélicoptère sur le pont du navire. Cette réalisation est avantageuse dans la mesure où les aménagements spécifiques sur l'hélicoptère ne sont pas plus complexes que ceux du dispositif comprenant une sonde, un câble d'appontage, et une pince de serrage, alors que les aménagements spécifiques sur le navire sont considérablement simplifiés, puisqu'il suffit de fixer une grille, par exemple circulaire, dans le plan du pont et dans une ouverture de la zone centrale de l'aire d'appontage, ce qui ne présente aucune difficulté particulière. De plus, lorsque l'hélicoptère est équipé d'un train d'atterrissage à roues pivotantes, en particulier du type tricycle à atterrisseur auxiliaire avant, l'hélicoptère peut tourner autour du harpon accroché dans la grille, sous l'effet de la poussée exercée par la rotation des rotors de l'hélicoptère, afin de s'aligner dans une direction souhaitée, soit face au vent, pour un décollage, soit pour être déplacé sur le pont vers une aire de garage.

En effet, après l'appontage de l'hélicoptère sur le pont, et son arrimage par l'un ou l'autre des deux dispositifs précités, il reste à déplacer l'hélicoptère vers une aire de garage, de préférence dans un hangar, afin de procéder aux opérations de maintenance, d'entretien, de réparation qui sont nécessaires, et/où de dégager l'aire d'appontage et de décollage pour permettre soit l'appontage, soit le décollage d'au moins un autre hélicoptère.

Ce déplacement peut également constituer une opération extrêmement dangereuse lorsque les conditions atmosphériques sont mauvaises et que le pont s'incline beaucoup en raison du roulis du navire, parce que le contrôle de l'hélicoptère peut être perdu pendant ce déplacement, ainsi que pendant les indispensables opérations préalables d'alignement de l'hélicoptère en vue de ce déplacement, car la positon occupée par l'hélicoptère arrimé au pont, après son appontement, peut varier considérablement d'un appontement à l'autre.

Pour ces raisons, de nombreux dispositifs de manœuvre d'un hélicoptère sur le pont de navire ont déjà été imaginés.

Le brevet français 2 036 986 décrit un dispositif comportant deux rails encastrés sous le pont et qui assurent le guidage longitudinal (c'est-à-dire dans le sens du passage de l'aire d'appontage à l'aire de garage) de deux chariots motorisés entraînant des pignons dentés qui engrènent dans des crémaillères portées par les deux rails. Chacun des chariots est relié à une extrémité d'une traverse disposée sur le pont, qui assure ainsi le déplacement longitudinal. Un autre chariot est guidée le long de la traverse et motorisé sur cette dernière afin d'assurer le déplacement transversal, tandis qu'un palonnier, monté tourillonnant autour d'un axe vertical à l'extrémité d'un bras sensiblement horizontal du chariot porté par la traverse, est accroché aux atterrisseurs principaux d'un hélicoptère, et permet l'orientation angulaire de ce dernier. L'hélicoptère est poussé ou tiré par ce dispositif, selon qu'il est équipé d'un train d'atterrissage à atterrisseur auxiliaire avant ou d'une roulette de queue, et sa trajectoire sur le pont est obtenue par combinaison du déplacement longitudinal de la traverse, du déplacement transversal du chariot, et de la rotation du palonnier. Ce dispositif, complexe et encombrant, ne peut être mis en œuvre qu'à la suite de travaux importants sur le navire, et il doit comprendre un ensemble chariot-palonnier spécifique pour chaque type d'hélicoptère. Il faut de plus que les atterrisseurs principaux soient équipés d'axes de reprise de l'ensemble chariot-palonnier personnalisé, et, dans le cas d'un hélicoptère équipé d'un atterrisseur auxiliaire avant, que ce dernier présente un déport de roue important. Enfin, ce dispositif n'est pas directement compatible avec les deux dispositifs d'aide à l'appontage présentés ci-dessus, car, pour accrocher le palonnier aux atterrisseurs principaux sans être gêné par la sonde ou le harpon qui dépassent sous le fuselage de l'hélicoptère dans la zone précisément disposée sensiblement entre les atterrisseurs principaux, il est nécessaire de rétracter la sonde ou le harpon dans l'hélicoptère, qui de ce fait n'est momentanément plus positivement ou matériellement retenu sur le pont, ce qui est inacceptable.

Le Certificat d'Addition n° 2 157 678 au brevet français précité décrit un dispositif similaire, dans lequel deux rails de guidage sur le pont du navire guident des boggies d'extrémité d'une traverse déplacée longitudinalement par un mécanisme de bandes latérales longitudinales entraînées dans les rails par les tambours motorisés, et le chariot de déplacement transversal est monté librement coulissant sur la traverse alors que, comme précédemment, l'orientation angulaire de l'hélicoptère est assurée par le palonnier fixé aux atterrisseurs principaux et tourillonnant sur le chariot autour d'un axe vertical.

Afin d'empêcher tout déplacement brusque de l'hélicoptère, soit en orientation angulaire, soit en déplacement transversal, en raison du roulis du navire, le dispositif comprend un mécanisme de freinage et d'amortissement.

Ce dispositif présente les mêmes inconvénients que celui décrit dans le brevet principal, mais de plus, la trajectoire de l'hélicoptère poussé ou tiré par ce dispositif dépend de l'orientation donnée à la roue ou aux roues de l'atterrisseur avant, ou à la roulette de queue orientable, par exemple par un homme de pont à l'initiative duquel est également laissé le passage au niveau de la porte du hangar, puisque rien ne vient matériellement imposer à l'hélicoptère une trajectoire sûre.

Le brevet français 2 234 190 décrit un dispositif comprenant un rail de guidage fixé sur le pont et le long duquel circule un chariot entraîné par un câble passant dans le rail et enroulé sur un treuil. Le chariot est équipé d'un manchon pivotant autour d'un axe vertical ainsi qu'autour d'un axe parallèle à l'axe du rail, et dans lequel est montée coulissante une poutre-caisson à denture coopérant avec un cliquet d'immobilisation fixé au manchon, afin de bloquer la poutre-caisson, dont les deux extrémités se fixent par l'intérieur aux axes des roues des atterrisseurs principaux, vis-à-vis du manchon et donc du chariot, après un alignement de l'hélicoptère sur le rail rectiligne. Le dispositif comprend également deux treuils latéraux enroulant deux câbles accrochés de part et d'autre de la partie arrière du fuselage de l'hélicoptère, afin de permettre l'alignement de ce dernier sur le rail. L'hélicoptère est tracté par l'intermédiaire de la poutre-caisson après une succession d'opération de centrage, verrouillage, et alignement, qui est longue et fastidieuse.

En effet, après la fixation des extrémités de la poutre-caisson aux axes des roues des atterrisseurs principaux, on effectue un premier alignement sommaire, à l'aide des treuils latéraux. Puis, un déplacement limité du chariot sur le rail par traction sur le câble en direction de l'aire de garage, provoque un certain coulissement de la poutre-caisson dans le manchon. Grâce au cliquet, on immobilise ensuite la poutre-caisson dans le manchon et on procède à l'alignement définitif de l'hélicoptère sur la direction du rail, à l'aide des treuils latéraux. Ce n'est qu'après avoir ensuite décroché de l'hélicoptère les câbles des

3.

treuils latéraux que l'hélicoptère est effectivement déplacé vers l'aire de garage, en déplaçant le chariot à l'aide du câble et du treuil installés à cet effet.

Ce dispositif, qui en peut être utilisé que pour manœuvrer des hélicoptères comportant une roulette de queue ou un atterrisseur auxiliaire arrière, n'est en aucun cas compatible avec le dispositif d'aide à l'appontage du type grille-harpon, car la disposition d'une grille dans la zone centrale de l'aire d'appontage entraîne la suppression d'une partie du rail, de sorte que le chariot ne peut plus être convenablement placé pour que la poutre-caisson qu'il porte puisse être fixée aux atterrisseurs principaux. De plus, comme l'axe de pivotement du chariot, à mi-distance entre les atterrisseurs principaux, est confondu avec l'axe du harpon, il est nécessaire de libérer le harpon de la grille et de le rétracter dans l'hélicoptère afin de pouvoir fixer la poutre-caisson, en supposant que cela soit possible. Il s'ensuit que l'hélicoptère n'est momentanément plus retenu matériellement sur le pont du navire, ce qui est une situation critique inacceptable compte tenu des divers mouvements auxquels le pont est soumis. Enfin, l'ensemble chariot-poutre-caisson de ce dispositif est fort encombrant et de structure complexe, et les atterrisseurs principaux de l'hélicoptère doivent être modifiés pour la reprise de la poutre-caisson.

Le brevet français 2 462 341 décrit un dispositif de manœuvre compatible avec les dispositifs d'aide à l'appontage que sont le dispositif grille-harpon et le dispositif sonde-câble d'appontage-pince de serrage. Ce dispositif de manœuvre comprend une piste sur le pont et un chariot mobile sur la piste. Ce chariot porte une sonde mobile en direction verticale et dont l'extrémité supérieure vient se placer dans un dispositif à pince de serrage monté dans la partie inférieure du fuselage de l'hélicoptère. La sonde est portée par un cadre qui se déplace transversalement sur le chariot par rapport à la direction longitudinale de la piste et qui peut être bloqué en position convenable sous la pince de serrage de l'helicoptère, afin de pouvoir coopérer avec cette dernière pour maintenir l'hélicoptère appliqué contre le pont.

On retrouve donc un dispositif analogue au dispositif d'aide à l'atterrissage à sonde et pince de serrage, mais avec une inversion dans la disposition des composants, puisque la pince de serrage est portée par l'hélicoptère et que la sonde est fixée sur le chariot se déplaçant sur le pont.

Mais le chariot est équipé de plus d'un second cadre, destiné à se déplacer longitudinalement par rapport au chariot, et qui porte une grille compatible avec un harpon d'un dispositif d'aide à l'appontage du type grille-harpon, de sorte qu'après l'appontage et la coopération du harpon de l'hélicoptère avec une grille du pont, puis la coopération de la sonde du chariot avec la pince de serrage de l'hélicoptère, le harpon peut être dégagé de la grille du pont puis engagé dans la grille du second cadre du chariot, après la mise en place de ce second cadre sous le harpon rétracté. L'hélicoptère ainsi rigidement relié au pont par deux liens (la sonde et le harpon) peut ensuite être déplacé par traction sur le chariot.

Ce dispositif présente donc les inconvénients d'être très complexe et de nécessiter des aménagements très conséquents et coûteux tant sur le navire que sur l'hélicoptère. De plus, malgré la possibilité de déplacement transversal du cadre qui porte la sonde par rapport au chariot, il est indispensable de procéder à des opérations d'orientation de l'hélicoptère, par exemple par des manœuvres particulières de l'atterrisseur avant, afin d'assurer un alignement précis et définitif de l'hélicoptère avant son déplacement proprement dit, cet alignement devant permettre la coopération du harpon avec la grille du chariot et un guidage deux points nécessaire à la rectitude du déplacement de l'helicoptère.

Le brevet des Etats-Unis d'Amérique n° 3 640 490 décrit des installations combinées d'aide à l'appontage et de manœuvre d'hélicoptère sur le pont d'un navire qui regroupent d'une part un dispositif d'aide à l'appontage du type à sonde, câble d'appontage et pince de serrage, et d'autre part un dispositif de manœuvre choisi parmi plusieurs variantes en fonction du type du train d'atterrissage qui èquipe l'hélicoptère.

Selon une première installation, destinée plus particulièrement aux hélicoptères équipés d'une roulette de queue, la pince de serrage est portée sur un chariot monté dans un rail encastré dans le pont et déplacé par traction sur un câble enroulé sur un treuil de halage.

Cette installation est complexe en raison des nombreux aménagements à apporter sur le navire, afin de permettre un déplacement du dispositif à pince de serrage avec le chariot (équipement électro-hydraulique comprenant une centrale hydraulique pour la manœuvre de la pince de serrage, et jeu de câbles et de treuils avec tensioneur et accumulateur de câble sous le pont). De plus, cette installation est désavantageuse car l'encombrement en hauteur notamment du chariot porte-pince est important, ce qui est très pénalisant lors de l'appontage et empêche la reception de certains hélicoptères, et d'autre part, parce que l'hélicoptère n'est remorqué par le chariot que par l'intermédiaire de la sonde qui pend sous le fuselage, de sorte que cette sonde escamotable doit être montée sur le fuselage par un dispositif d'encastrement très rigide, donc lourd et complexe.

Selon une seconde installation, le chariot de déplacement de l'hélicoptère sur le pont ne porte pas la pince de serrage, mais cette dernière est combinée à une table tournante montée dans la zone centrale de l'aire d'appontage. Après son appontage, l'hélicoptère repose sur la table tournante et se trouve retenu sur cette dernière par le serrage de la pince sur la sonde. La table est ensuite tournée afin d'aligner l'hélicoptère avec un tronçon de rail de prise en charge raccordé par un rail d'aiguillage à l'un ou l'autre de deux rails de déplacement conduisant chacun vers l'une de deux positions de garage dans le hangar. Un chariot porteur et d'entraînement équipé de verins de levage est guidé sur les rails et mis en place sous l'hélicoptère, de sorte qu'un mécanisme de blocage du chariot se solidarise à la sonde, ce qui est permis grâce à la coopération de la table tournante et du rail de prise en charge. Puis l'hélicoptère est également relié au chariot au niveau des différents vérins de levage et ces derniers sont alimentés par une centrale hydraulique portée par le chariot, afin de soulever l'hélicoptère par rapport à la table tournante, de sorte que par traction sur un câble rattaché au chariot et disposé dans l'axe du rail choisi, et après libération de la sonde par la pince de serrage, il est possible de déplacer le chariot qui porte l'hélicoptère vers l'emplacement correspondant dans le hangar.

Cette seconde installation est également désavantageuse du fait de la complexité des aménagements à apporter au navire, notamment au niveau de la combinaison de la pince de serrage et de la table tournante, et de leur entraînement en rotation, surtout si l'on veut que cette table puisse être utilisée pour recevoir des hélicoptères d'un certain tonnage. De plus, un mécanisme comprenant un câble, un treuil et une double crémaillère doit être installé pour le positionnement angulaire du rail de prise en charge. Enfin, le chariot porteur et d'entraînement est à la fois complexe et encombrant car sa structure doit résister à la charge de l'hélicoptère et ce chariot est équipé d'un mécanisme de blocage de la sonde, d'un mécanisme hydraulique de levage de l'hélicoptère et de la centrale hydraulique correspondante, ainsi que d'un dispositif de guidage sur les rails. Par ailleurs, il apparaît difficile d'envisager l'utilisation d'une telle installation pour l'appontage et les déplacements d'hélicoptères qui ne sont pas équipés de train d'atterrissage à patins.

Selon une troisième installation, plus particulièrement destinée aux hélicoptères dont le train d'atterrissage comprend un atterrisseur auxiliaire avant, le dispositif d'aide à l'appontage est tel que la pince de serrage est installée sous une ouverture circulaire du pont et dans laquelle doit pénétrer la sonde, et deux rails de guidage d'un chariot d'entraînement de l'hélicoptère sont sensiblement tangents à cette ouverture circulaire. Après son appontage et le serrage de la sonde dans la pince, l'hélicoptère est aligné sensiblement parallèlement à l'un des rails par la manœuvre d'un treuil transversal et de deux câbles accrochés de part et d'autre de la partie arrière du fuselage. Puis un chariot d'entraînement, muni d'un côté d'un manchon latéral dans lequel est montée coulissante une griffe de préhension de la sonde et, de l'autre côté, d'un bras latéral dont l'extrémité est munie d'un mécanisme d'accrochage, est mis en place sous l'hélicoptère, de sorte que la griffe saisisse la sonde et que le mécanisme d'accrochage soit fixé à l'attache de remorquage standard qui se trouve sur l'atterrisseur principal du côté correspondant de l'hélicoptère. La pince de serrage libère ensuite la sonde et le chariot est ensuite tracté par un câble et un treuil de halage vers le hangar. Cette réalisation, plus simple que les précédentes, présente cependant les inconvénients que le chariot doit être spécifique à l'hélicoptère reçu si l'on veut que le mécanisme d'accrochage du bras soit convenablement relié à l'un des atterrisseurs principaux, et qu'il existe pour chaque rail tangent à l'ouverture de passage de la sonde dans le pont, et pour chaque chariot se déplaçant le long de l'un des rails, une zone interdite dans cette ouverture, dans laquelle la sonde ne peut être saisie par la griffe de préhension du chariot en raison de la position en saillie dans l'ouverture du manchon correspondant. Dans ce cas, la sonde ne peut être saisie que par la griffe du chariot guidé par l'autre rail, mais si l'emplacement correspondant dans le hangar est déjà occupé par un autre hélicoptère, il devient impossible d'amener l'hélicoptère qui vient d'apponter dans le hangar.

Par ailleurs, il ne faut pas oublier que cette installation, ainsi que les deux autres décrites dans le dernier brevet précité, ne sont compatibles qu'avec un dispositif d'aide à l'appontage du type à sonde, câble d'appontage et pince de serrage, et qu'elles souffrent donc de toutes les limitations attachées à cette solution, notamment que le navire doit prendre une route aviation comme expliqué ci-dessus, avec tous les dangers que cela peut supposer. De plus, ces trois réalisations nécessitent toutes une opération d'alignement de l'hélicoptère préalable au déplacement vers le hangar, et donc des moyens spécifiques à cet effet.

Par la présente invention, on se propose de remédier aux inconvénients précités, et l'invention a pour but un dispositif de structure simple et peu coûteuse, qui se met en place facilement, sans imposer des modifications importantes ni de l'hélicoptère ni des superstructures du navire.

L'invention a également pour but un dispositif destiné à la manœuvre des hélicoptères dont le train d'atterrissage comprend au moins une roue ou roulette orientable, et qui est directement compatible, sans qu'il soit nécessaire de procéder à des aménagements notables, avec les dispositifs d'aide à l'appontage du type grille-harpon et du type sonde-câble d'appontage-pince de serrage.

Par rapport au document FR-A-2 462 341 qui décrit déjà un dispositif destiné à la manœuvre d'un engin supporté par au moins une roue orientable, tel qu'un hélicoptère, entre deux zones prédéterminées sur une plate-forme plane, telles qu'une aire d'appontage et de décollage et une aire de garage sur un pont de navire, et qui comprend un mécanisme de halage, destiné à entraîner l'engin d'une zone à l'autre, au moins un rail de guidage installé sur la plate-forme et s'étendant d'une zone à l'autre, le long duquel est destiné à se déplacer au moins un chariot de guidage muni d'un organe de liaison à l'engin, l'invention se caractérise en ce que le dispositif comprend de plus au moins une barre de guidage destinée à être reliée par une extrémité à la roue orientable et à être mise en prise et guidée par l'autre extrémité dans un rail de guidage, de sorte que l'engin est automatiquement et progressivement recentré et aligné sur le rail au début du déplacement d'une zone vers l'autre, grâce aux effets combinés du chariot et de la barre de guidage.

Selon l'invention, lorsque le rail de guidage du chariot est courbe, notamment dans sa partie qui s'étend sur l'aire de garage, afin de tirer le meilleur parti de la surface disponible à cet endroit, la barre de guidage est en prise dans un rail de guidage différent du rail de guidage du chariot, de sorte que les courbes du rail de guidage du chariot sont négociées sans ripage des pneumatiques des atterrisseurs principaux, alors que l'hélicoptère demeure à l'aplomb au-dessus du chariot.

Par contre, si le rail de guidage du chariot est rectiligne, ce qui facilite les déplacements dans les deux sens d'une zone à l'autre, ce rail peut simultanément être utilisé comme rail de guidage de la barre de guidage.

Cette solution est trés avantageuse non seulement lorsque le navire est équipé pour la première fois d'un dispositif de manœuvre, car il suffit d'installer un seul rail sur le pont par emplacement de garage dans le hangar, mais également lorsque le navire est déjà équipé d'un dispositif de manœuvre du type décrit dans le brevet des Etats Unis d'Amérique n° 3 640 490, qui peut être considérablement simplifié par la suppression de tous les moyens d'alignement préalables (tables rotative ou treuils transversaux) et dont le fonctionnement est grandement amélioré par des modifications conformes à l'invention. En effet, dans ce cas, le rail de guidage, le chariot et le mécanisme de halage du dispositif préexistant sont les seuls éléments conservés, et il suffit de leur adjoindre au moins une barre de guidage pour obtenir un dispositif selon l'invention, tel que la combinaison constituée par l'hélicoptère, le chariot, la barre de guidage et le rail réalisent un autocentrage pendant les déplacements, sans qu'il soit nécessaire de disposer d'éléments de centrage et d'alignement préalables et de verrouillage en centrage.

Selon l'invention, l'extrémité de la barre de guidage qui n'est pas en prise dans le rail peut être reliée aussi bien à la roulette de queue qu'à la roue ou aux roues d'un atterrisseur auxiliaire avant de l'hélicoptère, selon le type de train d'atterrissage dont ce dernier est équipé, et l'extrémité de la barre de guidage en prise dans le rail est disposée soit entre le point de liaison de l'autre extrémité de la barre de guidage et le point de fixation sur l'hélicoptère de l'organe de liaison au chariot, soit à l'extérieur du segment reliant ces deux points, dans le sens du déplacement, selon que l'hélicoptère est déplacé dans l'un ou l'autre sens de l'une des zones à l'autre.

De préférence, le dispositif comprend deux barres de guidage de longueur inégale, dont celle de plus petite longueur est utilisée avec son extrémité en prise dans le rail disposée entre le point de fixation sur l'hélicoptère de l'organe de liaison au chariot et le point de liaison de l'autre extrémité de la barre de guidage.

Dans une forme préférée de réalisation associée au dispositif harpon-grille d'aide à l'appontage, dont l'installation sur navire est facile à réaliser, qui ne nécessite pas la présence de personnel sur le pont, laisse toute liberté au pilote de l'hélicoptère et permet un appontage tout azimut, sans que le navire prenne la «route aviation», ainsi que le pivotement de l'hélicoptère rotors tournants, par l'orientation ou le déport de la roue avant, si le train d'atterrissage comprend un atterrisseur auxiliaire avant, l'organe de liaison du chariot à l'hélicoptère est une bielle télescopique, montée pivotante sur le chariot par une extrémité et dont l'autre extrémité est destinée à être montée pivotante sur une ferrure solidaire de la structure de l'hélicoptère sous le fuselage de ce dernier, dans le plan longitudinal médian de l'hélicoptère, et cette bielle télescopique exerce en permanence, pendant la manœuvre de l'hélicoptère, une traction sur ce dernier afin d'augmenter sa stabilité sur le pont du navire. Cette bielle télescopique peut être remplacée par un simple câble mis en tension par un vérin situé sur le chariot.

Le mécanisme de halage dans ce cas comprend avantageusement deux treuils, disposés dans l'axe du rail de guidage du chariot, de part et d'autre de la trajectoire de l'hélicoptère, et deux câbles enroulés chacun sur l'un des deux treuils, et tels que l'un des câbles est destiné à être accroché à un point de fixation sur l'avant de l'hélicoptère afin de déplacer ce dernier d'une zone à l'autre lorsque le treuil correspondant fonctionne en treuil de halage, alors que l'autre câble est destiné à être accroché à un point de fixation sur l'arrière de l'hélicoptère, afin de déplacer ce dernier en sens inverse lorsque le treuil correspondant fonctionne en treuil de halage.

De préférence, pendant ces déplacements, les deux câbles sont accrochés à l'hélicoptère et l'un des treuils fonctionne en treuil de halage alors que l'autre fonctionne en treuil de retenue, les deux câbles étant constamment maintenus tendus.

Afin de franchir au moins en partie la zone de la grille du dispositif d'aide à l'appontage qui sépare le rail de guidage du chariot du point d'accrochage du harpon dans la grille, le dispositif selon l'invention comprend de plus un petit rail de liaison, qui permet d'approcher suffisament le chariot de la ferrure structurale de l'hélicoptère pour que la bielle télescopique puisse être reliée à cette ferrure.

La présente invention sera mieux comprise à l'aide de la description donnée ci-après, à titre non limitatif, de deux exemples de réalisation, en référence aux figures annexées dans lesquelles:

— La figure 1 représente en plan une vue d'ensemble du pont arrière d'un navire équipé d'un dispositif d'aide à l'appontage du type grille-harpon et d'un dispositif selon l'invention, ainsi qu'un hélicoptère à train d'atterrissage tricycle à atterrisseur auxiliaire avant à l'appontage,

— La figure 2 représente une vue analogue à la fig. 1, après un pivotement de l'hélicoptère,

— La figure 3 est une vue en plan partielle de l'hélicoptère à l'appontage,

— La figure 4 est une vue analogue à la figure 3 après un pivotement de l'hélicoptère,

— La figure 5 est une vue analogue à la figure 3 après mise en place de la barre de guidage,

— La figure 6 est une vue analogue à la figure 3 au début du déplacement de l'hélicoptère vers le hangar,

    – La figure 7 est une vue analogue à la figure 3 en cours de déplacement de l'hélicoptère vers le hangar,

    – La figure 8 est une vue analogue à la figure 3 en cours de déplacement de l'hélicoptère vers l'aire de décollage,

    – Les figures 9 et 10 sont des vues schématiques respectivement en perspective et en coupe selon l'axe d'un rail d'un dispositif selon les figures 1 à 8, dont le rail est encastré dans le pont,

    – La figure 9a est une vue en perspective du chariot équipé d'un câble de liaison en variante de réalisation,

    – La figure 11 est une vue en coupe partielle représentant de face le rail encastré, le chariot et la bielle de liaison du dispositif selon les figures 9 et 10,

    – La figure 12 est une vue analogue à la figure 11 d'un dispositif dont le rail est en aspérité sur le pont,

    – La figure 13 est une vue de côté du dispositif représenté sur la figure 12,

    – La figure 14 est une vue analogue à la figure 1 du pont arrière d'un navire équipé d'un dispositif d'aide à l'appontage du type comprenant une sonde, une pince de serrage et un câble d'appontage, et tel que décrit dans le brevet américain précité, d'un dispositif selon l'invention, et sur lequel un hélicoptère vient d'apponter,

    – La figure 15 est une vue analogue à la figure 14 qui représente l'hélicoptère au début du déplacement vers le hangar,

    – La figure 16 est une vue en plan partielle représentant l'hélicoptère après l'appontage et mise en place de la barre de guidage, et

    – La figure 17 est une vue analogue à la figure 16 représentant l'hélicoptère en début de déplacement vers le hangar.

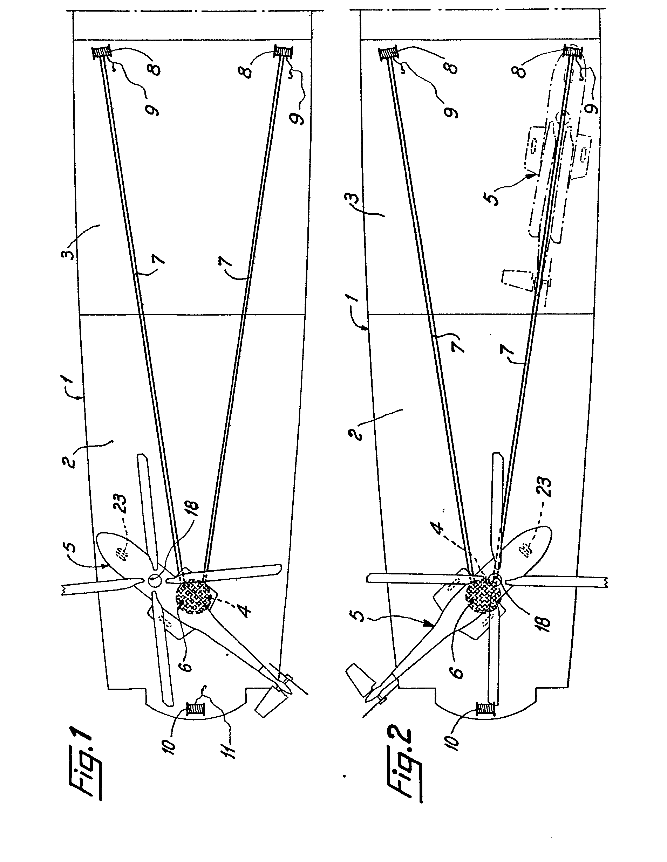

    Sur les figures 1 et 2, le pont arrière 1 d'un navire est divisé en une aire d'appontage et de décollage 2, située à l'arrière du navire, et une aire de garage 3 adjacente et protégée par un hangar, dans lequel deux hélicoptères d'un train d'atterrissage tricycle à atterrisseur auxiliaire avant peuvent être amarrés. Dans le plan de l'aire d'appontage 2 est installée une grille 4 centrée sur l'axe longitudinal du navire, d'un dispositif d'aide à l'appontage comprenant également, sur chaque hélicoptère 5, un harpon indiqué en 6, porté par l'hélicoptère 5 dans le plan longitudinal et médian de ce dernier, entre les deux atterrisseurs principaux.

    Le dispositif de manœuvre de l'hélicoptère 5 entre l'aire d'appontage 2 et l'aire de garage 3 comprend deux rails de guidage rectilignes 7, qui s'étendent de la grille 4 sensiblement jusqu'au fond du garage, en s'écartant l'un de l'autre, et un treuil 8, sur lequel est enroulé un câble avant 9 dont l'extrémité libre est équipée d'un crochet, et disposé à l'extrémité de chaque rail 7 dans le hangar, alors qu'un autre treuil 10, sur lequel est enroulé un câble arrière 11, dont l'extrémité libre est également équipée d'un crochet, est disposé à l'arrière du navire, sensiblement au point de rencontre des axes des deux rails 7.

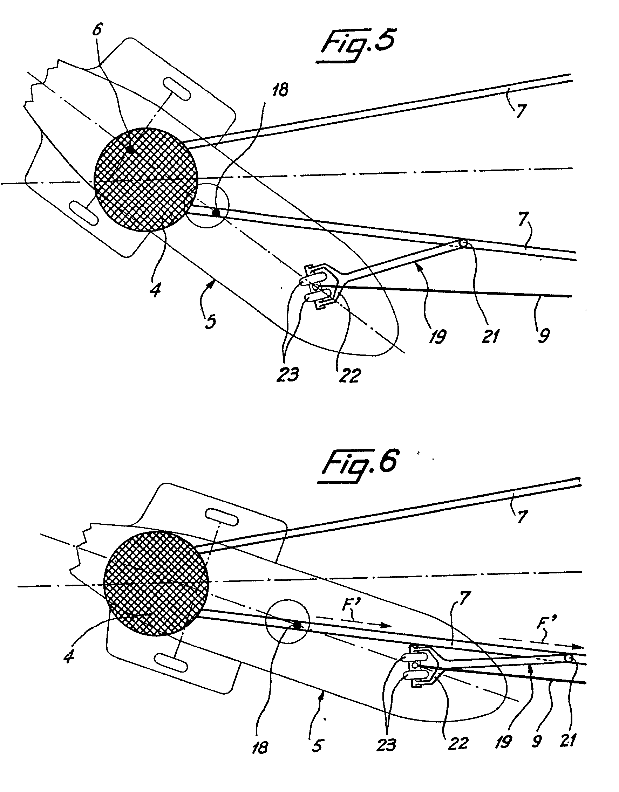

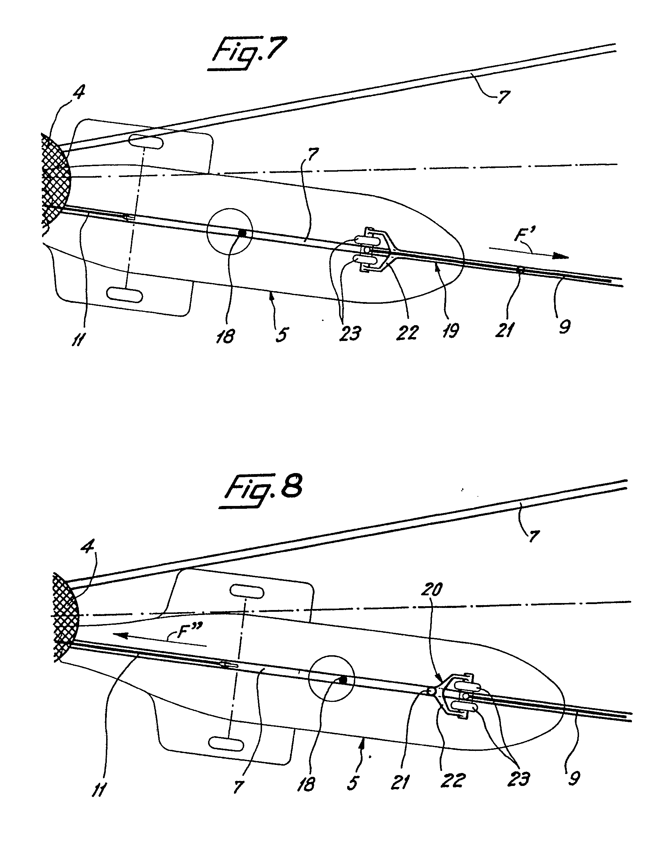

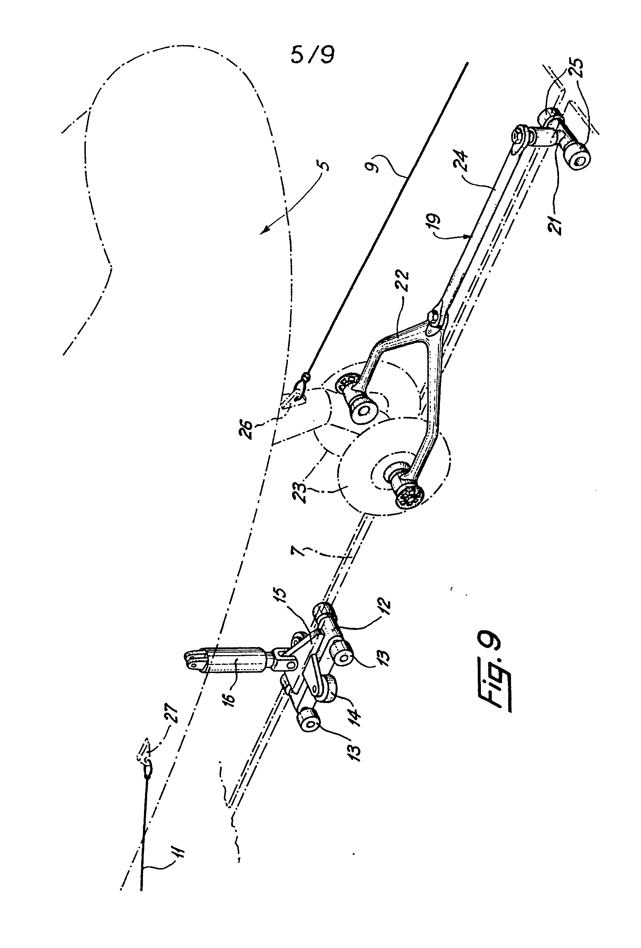

    Comme cela est représenté sur les figures 9 à 11, les rails 7 sont encastrés dans le pont 1 et se présentent chacun comme un caisson parallélépipédique allongé, qui s'ouvre dans le pont 1 par une rainure dans la partie médiane de sa face supérieure, et un chariot 12 est reçu dans chaque rail 7. Chaque chariot 12 comprend des galets verticaux 13, porteurs, disposés aux quatre coins, et deux galets latéraux et horizontaux 14, assurant le guidage contre les parois latérales des rails 7, ainsi qu'une attache supérieure verticale 15, passant dans l'ouverture du pont 1 et sur laquelle est montée pivotante autour d'un axe transversal par rapport à la direction du rail 7, et avec un certain débattement angulaire transversal, une extrémité d'une bielle télescopique 16, dont l'autre extrémité est destinée à être montée pivotante à l'aide d'une goupille 17 sur une ferrure structurale 18 fixée sous le fuselage de l'hélicoptère 5, sensiblement à l'aplomb de l'axe de rotation du rotor principal de ce dernier. Comme représenté sur la figure 9a, la liaison du chariot 12 à l'hélicoptère 5 peut être réalisée au moyen d'un câble 43 mis en tension par un vérin 44 dont le corps 45 est fixé longitudinalement sur le chariot 12. Le câble 43 est fixé à l'extrémité de la tige 46 du vérin 44 et passe sur une poulie 47 à axe horizontal disposée à l'extrémité du chariot 12. L'embout du câble est muni d'une cosse-cœur 48 pour permettre sa liaison avec un crochet rigidement solidaire de la structure inférieure de l'hélicoptère 5. Sur le navire, le dispositif de manœuvre comprend également deux barres de guidage de longueur inégale, dont la plus longue 19 est représentée schématiquement sur les figures 5, 6, 7 et 10, et la plus courte 20 sur la figure 8, et dont chacune comporte à une extrémité un galet 21 de prise dans l'un des rails 7 et à l'autre extrémité, une chape 22 de fixation aux deux extrémités de l'axe de rotation des deux roues 23 montées en diabolo (c'est-à-dire montées côte-à-côte sur un axe commun) de l'atterrisseur auxiliaire avant de l'hélicoptère 5.

    Comme représenté sur la figure 9, la barre de guidage la plus longue 19 peut être constituée par une chappe 22 montée amovible à une extrémité d'une barre 24 de manière à être rigidement liée à cette dernière, par exemple par des éléments de liaison de section carrée, empêchant toute rotation relative, et l'autre extrémité de la barre 24 est montée amovible et pivotante sur le galet de prise 21, qui est muni de deux galets 25 de roulage dans le rail 7, montés aux extrémités de la barre horizontale d'un élément en forme de T, dont la barre verticale passe dans l'ouverture du pont 1, afin d'être fixée à la barre 24, tandis que la barre de guidage la plus courte 20 est simplement constituée par le montage de la chappe 22 directement sur la galet de prise 21.

    Mais les barres de guidage 19 et 20 peuvent être réalisées de bien d'autres manières différentes, de sorte que le galet de prise 21 puisse être facilement introduit dans les rails 7.

Le dispositif est complété sur l'hélicoptère 5 par une attache de fixation avant 26, sur l'atterrisseur auxiliaire avant, qui n'est autre que l'attache de remorquage, qui se trouve toujours prévue sur cet atterrisseur, afin de permettre le désembourbage éventuel de l'hélicoptère, et qui est, au sein du dispositif selon l'invention, destiné à l'accrochage de l'un des câbles avant 9, et le dispositif est enfin complété par une attache de fixation arrière 27, sous la partie arrière du fuselage, et destinée à l'accrochage du câble arrière 11.

L'attache de fixation avant 26, la ferrure structurale 18 de fixation de la bielle télescopique 16, le harpon 6, et l'attache de fixation arrière 27 sont disposés dans cet ordre de l'avant vers l'arrière de l'hélicoptère, et dans le plan longitudinal médian de ce dernier.

Afin de pouvoir fixer les barres de guidage, deux autres attaches sont prévues aux extrémités de l'axe des roues 23 de l'atterrisseur auxiliaire avant.

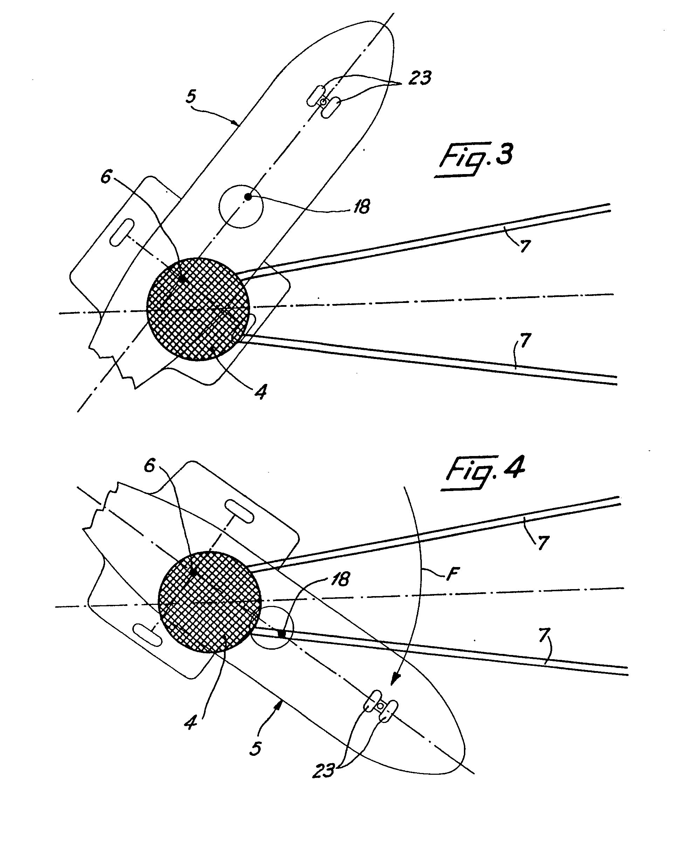

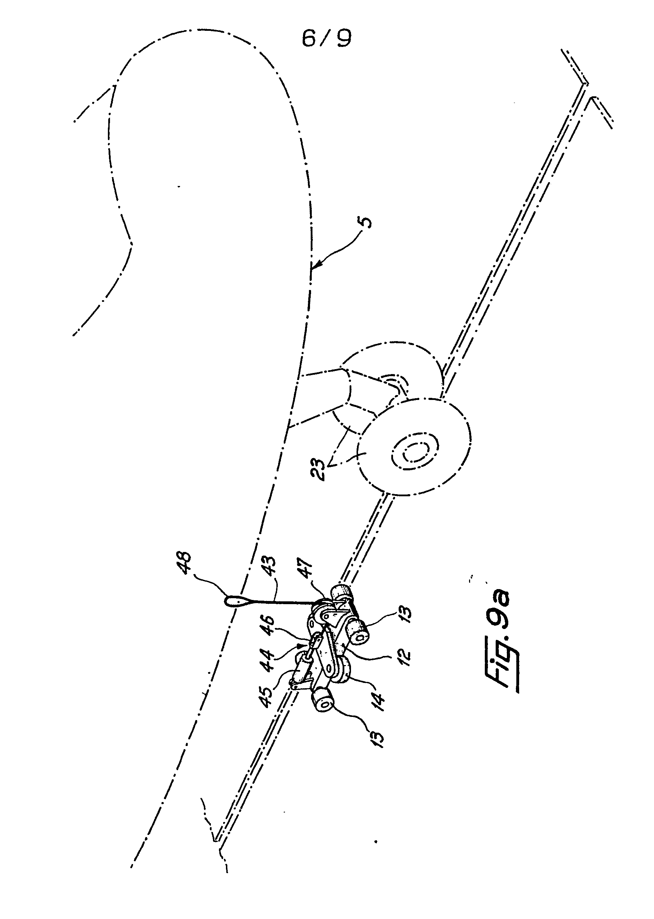

Ce dispositif est mis en œuvre de la façon suivante: juste après l'appontage, l'hélicoptère 5 se trouve par exemple dans la position représentée sur les figures 1 et 3. Le harpon 6 est accroché dans la grille 4 fermement fixée au pont 1 et l'hélicoptère 5 posé est maintenu sur le pont 1. Les rotors de l'hélicoptère étant toujours entraînés en rotation, l'hélicoptère pivote ensuite autour du harpon 6 par l'orientation des roues 23 de l'atterrisseur avant, grâce à l'implantation du harpon 6 dans le plan longitudinal médian, entre les atterrisseurs principaux, et le pilote de l'hélicoptère fait pivoter l'appareil comme indiqué par la flèche F jusqu'au moment où la ferrure 18 d'attache sous le fuselage est sensiblement à la verticale de celui des rails 7 qui mène à l'emplacement dans le garage destiné à cet hélicoptère 5, comme cela est représenté sur les figures 2 et 4. On déplace le chariot 12 en le faisant rouler dans le rail 7 correspondant depuis le hangar, et on le met en place sous l'hélicoptère 5, puis on accroche la bielle télescopique 16 à la ferrure 18 à l'aide de la goupille 17, et on met la bielle 16 en tension, de sorte qu'elle exerce une traction sur l'hélicoptère 5 afin d'augmenter la stabilité de ce dernier sur le pont 1 du navire, et de verrouiller l'hélicoptère 5 au chariot 12. Après arrêt des rotors les pales de l'hélicoptère peuvent ensuite être repliées, par exemple toutes vers l'arrière, comme représenté sur la figure 10, et la barre de guidage la plus longue 19 est montée par la chape 22 sur l'axe des roues 23 de l'atterrisseur avant et mise en prise dans le rail 7 correspondant par le galet 21, en un point situé en avant de l'atterrisseur avant, en direction du hangar, après une orientation correspondante des roues avant 23. Puis on accroche le câble avant 9 correspondant sur l'attache 26 de l'atterrisseur avant, et le câble arrière 11 sur l'attache arrière 27, et l'on tend ces câbles à l'aide des treuils 8 et 10, comme représenté sur la figure 5. Comme l'hélicoptère 5 est alors retenu sur le pont 1 non seulement par la bielle 16 sous tension mais également par les câbles 9 et 11, il est alors possible de décrocher le harpon 6 de la grille 4. A la suite du décrochage de ce harpon 6, on exerche une traction sur le câble 9 à l'aide du treuil 8 fonctionnant en treuil de halage, alors que le treuil 10 fonctionne en treuil de retenue, de sorte que le cable arrière 11 reste toujours tendu et se déroule progressivement au fur et à mesure que le câble avant 9 s'enroule sur le treuil 8. L'hélicoptère 5 est ainsi déplacé en direction du hangar, selon un mouvement déterminé par le déplacement du chariot 12 rattaché à la ferrure 18 et du galet 21 de la barre de guidage 19 dans le rail 7, dans la direction indiquée par les flèches F' sur la figure 6. Dès le début du déplacement de l'hélicoptère 5, en raison de la présence et de la position de la barre de guidage 19 par rapport au chariot 12, il se produit un recentrage et un alignement automatique et progressif de l'hélicoptère 5 sur l'axe du rail 7, comme cela est représenté sur la figure 6, et très rapidement l'hélicoptère 5 prend la position alignée sur le rail 7, comme représenté sur la figure 7, jusqu'à sa position sur son emplacement de garage dans le hangar, comme représenté en traits mixtes sur la figure 2. Dans le hangar, la bielle télescopique 16 est maintenue en place sur l'hélicoptère 5, et ce dernier est en plus amarré au moyen de chaînes. Puis les câbles avant 9 et arrière 11 sont décrochés.

Pour amener l'hélicoptère 5 du hangar sur l'aire de décollage 2, la bielle 16 étant toujours en tension entre l'hélicoptère 5 et le chariot 12, on fixe la petite barre de guidage 20 sur l'axe des roues 23 par sa chape 22 et on introduit son galet 21 en prise dans le rail 7, en un point situé entre les roues 23 et la liaison du chariot 12 à la ferrure 18 par la bielle télescopique 16, puis on accroche le câble avant 9 sur l'attache avant 26 et le câble arrière 11 sur l'attache arrière 27, et l'on met les câbles 9 et 11 sous tension. On enlève les chaînes d'amarrage de l'hélicoptère, et l'on fait fonctionner le treuil 10 en treuil de halage et le treuil 8 correspondant en treuil de retenue, de manière à déplacer l'hélicoptère 5 dans la direction indiquée par la flèche F'', comme représenté sur la figure 8, en direction de la grille 4. Lorsque l'hélicoptère est tel que le harpon 6 est au-dessus de la grille 4, on engage le harpon 6 dans cette dernière, puis on décroche les deux câbles 9 et 11, on enlève la barre de guidage 20 et on libère la bielle télescopique 16. Les rotors de l'hélicoptère 5 peuvent ensuite être entraînés en rotation, puis l'hélicoptère se place face au vent par rotation autour du harpon 6 et ensuite décolle en décrochant ce dernier.

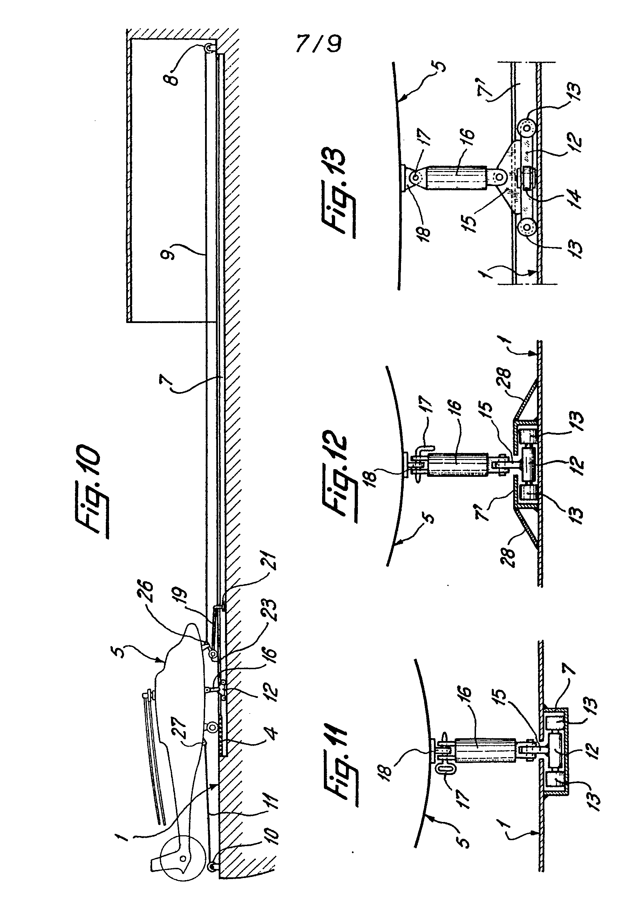

Après l'appontage, pour permettre de rapprocher suffisamment le chariot 12 de la ferrure 18, afin que la bielle télescopique 16 puisse être fixée à l'hélicoptère 5, dans les cas où le harpon 6 est engagé dans la partie de la grille 4 située vers l'arrière du navire, il peut être nécessaire de mettre en place un tronçon de rail de liaison (non représenté) dans le prolongement du rail choisi. Ceci peut être très facilement exécuté lorsque le rail est en aspérité sur le pont 1, comme cela est représenté les figures 12 et 13. Dans ce cas, le rail 7' est latéralement raccordé au pont 1 par des pans inclinés 28 et, pour un type d'hélicoptère précis, affecté au navire, la largeur du rail 7' peut être adaptée à celle des deux roues 23 montées en diabolo de l'atterrisseur auxiliaire avant, afin d'obtenir un guidage supplémentaire. De même, la largeur des pans inclinés est choisie pour que la largeur totale du rail 7' et des deux pans inclinés 28 soit compatible avec l'entraxe des roues des atterrisseurs principaux, afin d'obtenir un guidage amélioré du train d'atterrissage principal.

On note de plus que les rails 7 et 7' rectilignes permettent sans difficulté d'exécuter les manœuvres dans les deux sens entre le hangar et l'aire de décollage et d'appontage 2. Si les rails 7 ou 7' sont courbes, afin de tirer le meilleur parti possible de la surface disponible dans le hangar par exemple, les déplacements s'effectueront de la même manière, mais le galet 21 des barres de guidage 19 et 20 sera mis en prise dans un autre rail que les rails 7 et 7', afin que les courbes de ces rails 7 et 7' soient passées sans que l'hélicoptère 5 ne cesse d'être au-dessus du chariot 12.

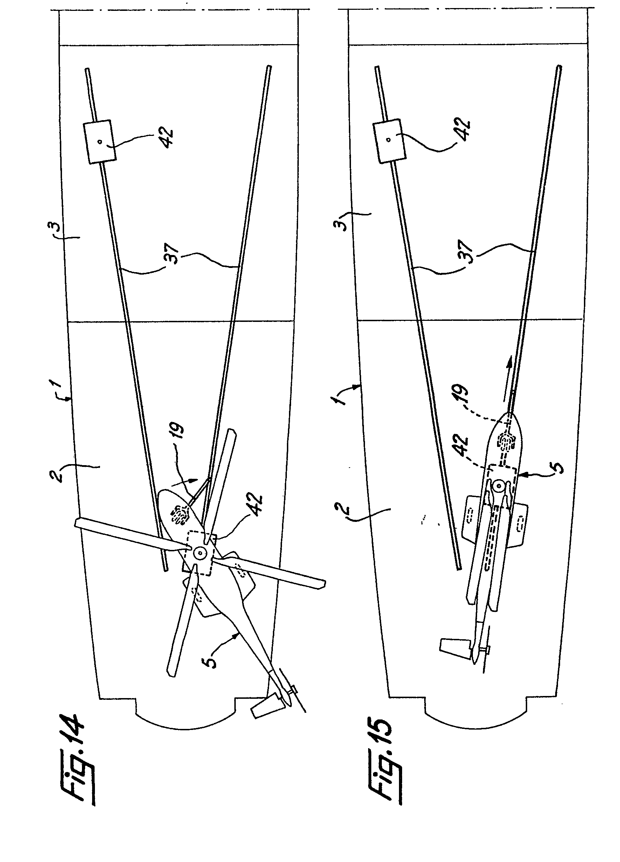

Sur les figures 14 à 17, on a schématiquement représenté un autre mode de réalisation du dispositif de manœuvre selon l'invention et sa mise en œuvre.

Ce second exemple de dispositif de manœuvre est compatible avec un dispositif d'aide à l'appontage du type comprenant un câble d'appontage, une sonde et une pince de serrage, comme décrit ci-dessus. Le dispositif de manœuvre comprend dans ce cas un chariot de guidage et d'entraînement, déplacé le long d'un rail par un câble et un treuil du type décrit par exemple dans le brevet des Etats-Unis d'Amérique 3 640 490 précité.

A ce rail de guidage et à ce chariot qui coopère avec la sonde de l'hélicoptère, et qui peuvent déjà équiper un navire, on associe deux barres de guidage 19 et 20 que l'on fixe comme précédemment par la chape 22 à l'axe de celle(s) des roues du train d'atterrissage de l'hélicoptère qui est orientable, et dont le galet de prise 21 est mis en prise dans le rail.

Sur les figures 14 et 15, on a représenté un pont arrière 1 de navire et un hélicoptère 5 identiques à ceux représentés sur les figures 1 et 2, et les éléments identiques aux éléments représentés sur les figures 1 à 13 sont repérés par les mêmes références.

Les rails 37 et les chariots 42 d'entraînement et de guidage, ainsi que leurs moyens d'entraînement, sont ceux d'un dispositif de manœuvre préexistant sur le navire, et dont les composants sont utilisés dans le cadre du dispositif de manœuvre selon l'invention.

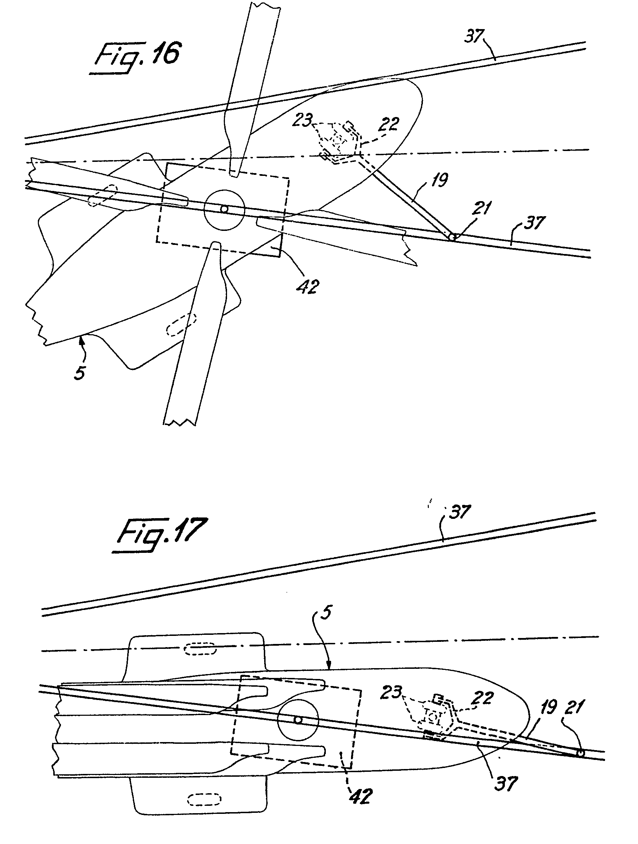

Sur la figure 14, après l'appontage, l'hélicoptère est maintenu contre le pont 1 par sa sonde qui est enserrée dans la pince de serrage, et ensuite par sa liaison au chariot 42. Puis, comme représenté sur les figures 14 et 16, on met en place la barre de guidage 19 de la même manière que cela a été décrit dans l'exemple précédent. Puis les pales de l'hélicoptère 5 sont repliées, par exemple toutes vers l'arrière dès l'arrêt des rotors, et les moyens d'entraînement du chariot 42 sont mis en œuvre,

et, dès le début du roulage, comme cela est représenté sur la figure 17, l'hélicoptère 5 se recentre et s'aligne progressivement et automatiquement sur l'axe du rail 37 choisi grâce à la présence et à la position de la barre 19 par rapport au chariot 42. Très rapidement, l'hélicoptère se trouve aligné comme cela est représenté sur la figure 15, tout en étant déplacé en direction du hangar.

Le déplacement en sens inverse, du hangar vers l'aire de décollage 2, s'effectue comme dans le premier exemple, en substituant la petite barre de guidage 20 à la grande 19, en mettant son galet 21 en prise dans le rail 37 entre les roues avant 23 de l'atterrissage avant et le chariot 42.

On constate ainsi que dans les deux exemples de réalisation, la combinaison d'un hélicoptère, d'un chariot, d'un rail et d'une barre de guidage au moins réalise un auto-centrage, en cours de manœuvre, de sorte que cette dernière est plus rapide et qu'il n'est plus nécessaire de monter un dispositif d'alignement et de verrouillage de l'alignement particulier.

Par la simple substitution des deux barres de guidage à des dispositifs d'alignement et de verrouillage antérieurs, on améliore dans une large mesure la sécurité de fonctionnement d'installations existantes combinées avec un dispositif d'aide à l'appontage du type comprenant un câble d'appontage, une sonde et une pince de serrage.

Par contre, à l'occasion d'un premier aménagement d'un navire, avec un dispositif d'aide à l'appontage du type grille-harpon, ou lorsqu'un navire est déjà équipé d'un tel dispositif, il est avantageux d'installer un dispositif de manœuvre selon les figures 1 à 13, car, en plus des avantages précédemment cités, le chariot est tracté par l'hélicoptère et n'est donc pas un chariot tracteur, comme cela est le cas dans toutes les installations analogues de l'état de la technique, de sorte que ce chariot n'est pas sollicité en flexion, et la bielle télescopique de liaison du chariot à l'hélicoptère exerce un effort de traction sur l'hélicoptère, ce qui plaque ce dernier sur le pont et augmente sa stabilité pendant les manœuvres.

En outre, l'orientation automatique de l'hélicoptère au début du roulage s'effectue sans ripage des pneumatiques des atterrisseurs principaux.

Enfin, il n'est dans ce cas pas nécessaire que le navire prenne une «route aviation».

Bien que les deux exemples de réalisation du dispositif de manœuvre selon l'invention ont été décrits ci-dessus dans leur mise en œuvre pour un hélicoptère équipé d'un train d'atterrissage à atterrisseur auxiliaire avant ayant des roues orientables, ces deux dispositifs peuvent également être utilisés sur des hélicoptères équipés d'une roulette de queue orientable.

**Revendications**

1. Dispositif de manœuvre d'un engin supporté par au moins une roue orientable (23), tel qu'un hélicoptère (5), entre deux zones prédéterminées sur une plate-forme plane, telles qu'une aire d'appontage et de décollage (2) et une aire de garage (3) sur un pont de navire (1), et qui comprend un mécanisme de halage (8, 9, 10, 11) destiné à entraîner l'engin d'une zone à l'autre, et au moins un rail de guidage (7) installé sur la plate-forme et s'étendant d'une zone à l'autre, et le long duquel est destiné à se déplacer au moins un chariot de guidage (12) muni d'un organe de liaison (16) à l'engin, caractérisé en ce qu'il comprend de plus au moins une barre de guidage (19, 20) destinée à être reliée par une extrémité (22) à la roue orientable (23) et à être mise en prise et guidée par l'autre extrémité (21) dans un rail de guidage (7) de sorte que l'engin est automatiquement et progressivement recentré et aligné sur le rail du début du déplacement d'une zone vers l'autre, grâce aux effets combinés du chariot (12) et de la barre de guidage (19, 20).

2. Dispositif selon la revendication 1, caractérisé en ce que le rail de guidage (7) du chariot (12) est courbe, et en ce que la barre de guidage (19, 20) est en prise dans un rail de guidage différent du rail de guidage (7) du chariot (12).

3. Dispositif selon la revendication 1, caractérisé en ce que le rail de guidage (7) du chariot (12) est rectiligne et constitue simultanément le rail de guidage de la barre de guidage (19, 20).

4. Dispositif selon l'une des revendications 1 à 3, caractérisé en ce que l'extrémité (21) de la barre de guidage (19, 20), qui est en prise dans le rail (7) est disposée soit entre le point de liaison de l'autre extrémité (22) de la barre de guidage à la roue orientable (23) de l'engin, et le point de fixation sur l'engin (5) de l'organe de liaison (16) au chariot (12), soit à l'extérieur du segment reliant ces deux points, dans le sens du déplacement de l'engin (5) lorsque ce dernier est déplacé dans l'un ou l'autre sens de l'une des zones à l'autre.

5. Dispositif selon l'une des revendications 1 à 4, caractérisé en ce qu'il comprend deux barres de guidage de longueur inégale, dont celle de plus petite longueur (20) est utilisée avec son extrémité (21) en prise dans le rail (7) disposée entre le point de fixation sur l'engin (5) de l'organe de liaison (16) au chariot (12) et le point de liaison de l'autre extrémité (22) de la barre de guidage (20) à la roue orientable (23) de l'engin (5).

6. Dispositif selon l'une des revendications 1 à 5, caractérisé en ce que l'organe de liaison du chariot (12) à l'engin (5) est une bielle télescopique (16) montée pivotante sur le chariot (12) par une extrémité et dont l'autre extrémité est destinée à être montée pivotante sur une ferrure (18) solidaire de la structure de l'engin (5).

7. Dispositif selon l'une des revendications 1 à 5, caractérisé en ce que l'organe de liaison du chariot (12) à l'engin (5) est constitué par un câble (43), fixé à l'extrémité de la tige (46) d'un vérin (44) solidaire dudit chariot (12), passant sur une poulie (47) de renvoi portée par le chariot (12) et ayant son extrémité libre conformée en cosse-coeur (48) pour permettre son accrochage à l'engin (5) au moyen d'un crochet solidaire de ce dernier.

8. Dispositif selon l'une des revendications 6 et 7, caractérisé en ce que l'organe de liaison exerce en permanence, pendant la manœuvre de l'engin (5) une traction sur ce dernier afin d'augmenter sa stabilité.

9. Dispositif selon l'une des revendications 1 à 8, caractérisé en ce que le mécanisme de halage comprend, pour chaque rail (7), deux treuils (8, 10) disposés dans l'axe du rail (7) de guidage du chariot (12), de part et d'autre de la trajectoire de l'engin (5), et deux câbles (9 et 11) enroulés chacun sur l'un des deux treuils, et tels que l'un des câbles est destiné à être accroché à un point de fixation (26) sur l'avant de l'engin (5), afin de déplacer ce dernier d'une zone à l'autre lorsque le treuil correspondant fonctionne en treuil de halage, alors que l'autre câble est destiné à être accroché à un point de fixation (27) sur l'arrière de l'engin (5) afin de déplacer ce dernier en sens inverse lorsque le treuil correspondant fonctionne en treuil de halage.

10. Dispositif selon la revendication 9, caractérisé en ce que les deux câbles (9 et 11) sont accrochés à l'engin (5) et sont constamment tendus alors que l'un des treuils (8, 10) fonctionne en treuil de halage et que l'autre treuil fonctionne en treuil de retenue.

11. Dispositif selon l'une des revendications 1 à 10, combiné à un dispositif d'aide à l'appontage du type grille-harpon, caractérisé en ce qu'il comprend de plus un rail de liaison, qui permet d'approcher suffisamment le chariot (12) de l'engin (5) pour que l'organe de liaison (16) puisse être rattaché à l'engin, lorsque le harpon (10) de ce dernier est accroché à la grille (4) de la plate-forme dans une zone éloignée du rail de guidage (7).

**Patentansprüche**

1. Vorrichtung zum Manövrieren eines Apparates, der durch mindestens ein verstellbares Rad (23) getragen wird, beispielsweise eines Hubschraubers (5), zwischen zwei auf einer ebenen Plattform befindlichen, vorgegebenen Zonen, beispielsweise einer Lande- und Startfläche (2) und einer Abstellfläche (3) auf einer Schiffsbrücke (1), mit einer Einholvorrichtung (8, 9, 10, 11), um den Apparat von einer Zone zur anderen zu schleppen, und mindestens einer auf der Plattform angebrachten Führungsschiene (7), die sich von einer Zone zur anderen erstreckt, und längs welcher sich mindestens ein Führungswagen (12), der mit einer Befestigungseinrichtung (16) für den Apparat ausgestattet ist, bewegt, dadurch gekennzeichnet, dass ferner mindestens eine Führungsstange (19, 20) vorgesehen ist, die dazu dient, mit einem Ende (22) am verstellbaren Rad (23) befestigt zu werden und mit dem anderen Ende (21) in Eingriff mit einer Führungsschiene (7) zu gelangen und von dieser geführt zu werden, so dass der Apparat zu Beginn der Verschiebung von einer Zone zur anderen selbsttätig und fortschreitend auf der Schiene erneut zentriert und ausgerichtet wird, und zwar infolge der kombinierten Wirkungen des Wagens (12) und der Führungsstange (19, 20).

2. Vorrichtung nach Anspruch 1, dadurch gekennzeichnet, dass die Führungsschiene (7) des Wagens (12) gewölbt ist und dass die Führungsstange (19, 20) in Eingriff mit einer Führungsschiene steht, die von der Führungsschiene (7) des Wagens (12) verschieden ist.

3. Vorrichtung nach Anspruch 1, dadurch gekennzeichnet, dass die Führungsschiene (7) des Wagens (12) geradlinig verläuft und gleichzeitig die Führungsschiene der Führungsstange (19, 20) bildet.

4. Vorrichtung nach einem der Ansprüche 1 bis 3, dadurch gekennzeichnet, dass das Ende (21) der Führungsstange (19, 20), die in Eingriff mit der Schiene (7) steht, entweder zwischen dem Verbindungspunkt des anderen Endes (22) der Führungsstange mit dem verstellbaren Rad (23) des Apparates und dem am Apparat (5) vorhandenen Befestigungspunkt für das Verbindungselement (16) zum Wagen (12), oder ausserhalb des Segments, das diese beiden Punkte in der Richtung der Verschiebung des Apparates (5) verbindet, angeordnet ist, wenn letzterer in der einen oder anderen Richtung von der einen zur anderen Zone verschoben wird:

5. Vorrichtung nach einem der Ansprüche 1 bis 4, dadurch gekennzeichnet, dass sie zwei Führungsstangen ungleicher Länge aufweist, wovon die kürzere (20) verwendet wird, indem ihr mit der Schiene (7) in Eingriff stehendes Ende (21) zwischen dem Befestigungspunkt des Apparates (5) für die Befestigungseinrichtung (16) am Wagen (12) und dem Verbindungspunkt des anderen Endes (22) der Führungsstange (20) mit dem verstellbaren Rad (23) des Apparates (5) angeordnet ist.

6. Vorrichtung nach einem der Ansprüche 1 bis 5, dadurch gekennzeichnet, dass die Befestigungseinrichtung des Wagens (12) am Apparat (5) eine ausziehbare Schubstange (16) ist, die an einem Ende schwenkbar am Wagen (12) befestigt ist und deren anderes Ende dazu dient, schwenkbar an einem Beschlagteil (18) befestigt zu werden, der fest mit dem Aufbau des Apparates (5) verbunden ist.

7. Vorrichtung nach einem der Ansprüche 1 bis 5, dadurch gekennzeichnet, dass die Befestigungseinrichtung des Wagens (12) am Apparat (5) durch ein Seil (43) gebildet wird, das am Ende einer Kolbenstange (46) eines fest am Wagen (12) angebrachten Zylinders (44) befestigt ist, dass das Seil über eine vom Wagen (12) getragene Umlenkscheibe (47) läuft und sein freies Ende zu einer Kausche (48) geschlungen ist, um sein Einhängen am Apparat (5) mittels eines am Apparat befestigten Hakens zu gestatten.

8. Vorrichtung nach einem der Ansprüche 6 und 7, dadurch gekennzeichnet, dass die Verbindungseinrichtung während des Manövrierens des Apparates (5) ständig auf letzteren einen Zug ausübt, um seine Stabilität zu erhöhen.

9. Vorrichtung nach einem der Ansprüche 1 bis 8, dadurch gekennzeichnet, dass die Einholvorrichtung für jede Schiene (7) zwei Winden (8, 10) umfasst, die in der Achse der Führungsschiene (7) des Wagens (12) beiderseits der Bewegungsbahn des Apparates (5) angeordnet sind, sowie zwei Seile (9, 11), wovon jedes auf einer der beiden Winden derart aufgewickelt ist, dass eines der Seile dazu dient, an einem Befestigungspunkt (26) an der Vorderseite des Apparates (5) eingehängt zu werden, um den Apparat von einer Zone zur anderen zu verschieben, wenn die zugeordnete Winde als Einholwinde arbeitet, während das andere Seil dazu bestimmt ist, an einem Befestigungspunkt (27) am rückwärtigen Bereich des Apparates (5) eingehängt zu werden, um diesen in umgekehrter Richtung zu verschieben, wenn die zugeordnete Winde als Einholwinde arbeitet.

10. Vorrichtung nach Anspruch 9, dadurch gekennzeichnet, dass die beiden Seile (9, 11) am Apparat (5) eingehängt sind und ständig unter Spannung stehen, während eine der Winden (8, 10) als Einholwinde und die andere Winde als Halterungswinde arbeitet.

11. Vorrichtung nach einem der Ansprüche 1 bis 10, in Verbindung mit einer Landehilfe, die als Gitter-Harpune-Einreichung ausgebildet ist, dadurch gekennzeichnet, dass ferner eine Verbindungsschiene vorgesehen ist, die es gestattet, den Wagen (12) des Apparates (5) ausreichend heranzuführen, damit die Verbindungseinrichtung (16) am Apparat befestigt werden kann, wenn die Harpune (10) des Apparates am Gitter (4) der Plattform in einer von der Führungsschiene (7) entfernten Zone eingehängt ist.

**Claims**

1. An apparatus for manoeuvring a machine supported by at least one swivellable wheel (23), such as a helicopter (5), between two predetermined zones on a flat platform, such as a landing and take-off area (2) and a hangar area (3) on a deck of a ship (1), comprising a hauling mechanism (8, 9, 10, 11) intended to draw the machine from one zone to the other and at least one guide rail (7) provided on the platform, reaching from one zone to the other and along which is intended to move at least one guide carriage (12) equipped with a member (16) connecting it to the machine, characterized in that it additionally comprises at least one guide bar (19, 20) intended to be connected at one end (22) to the swivellable wheel (23) and at the other end (21) to be engaged in and guided by a guide rail (7) in such a way that when displacement from one zone towards the other begins the machine is automatically and progressively centred and aligned on the rail by means of the combined action of the carriage (12) and the guide bar (19, 20).

2. An apparatus according to claim 1, characterized in that the guide rail (7) of the carriage (12) is curved, and in that the guide bar (19, 20) is engaged in a different guide rail from the guide rail (7) of the carriage (12).

3. An apparatus according to claim 1, characterized in that the guide rail (7) of the carriage (12) is rectilinear and at the same time forms the guide rail of the guide bar (19, 20).

4. An apparatus according to any one of claims 1 to 3, characterized in that the end (21) of the guide bar (19, 20), which end is engaged in the rail (7), is arranged either between the point of connection of the other end (22) of the guide bar to the swivellable wheel (23) of the machine and the point where the member (16) connects the carriage (12) to the machine (5), or outside the segment connecting these two points, in the direction of movement of the machine (5) when this latter is moved in one or other direction from one of the zones to the other.

5. An apparatus according to any one of claims 1 to 4, characterized in that it comprises two guide bars of unequal lenght, the shorter (20) of which is used with its end (21), which is engaged in the rail (7), arranged between the point where the member (16) connects the carriage (12) to the machine (5) and the point of connection of the other end (22) of the guide bar (20) to the swivellable wheel (23) of the machine (5).

6. An apparatus according to any one of claims 1 to 5, characterized in that the member which connects the carriage (12) to the machine (5) is a telescopic connecting rod (16) mounted at one end pivotally on the carriage (12) and whose other end is intended to be mounted pivotally on a fitting (18) of one piece with the frame of the machine (5).

7. An apparatus according to any one of claims 1 to 5, characterized in that the member which connects the carriage (12) to the machine (5) consists of a cable (43) which is fixed to the end of the stem (46) of a jack (44) of one piece with the said carriage (12), passes round a return-pulley ( 47) carried by the carriage (12) and has its free end formed into a heart-shaped thimble (48) to enable it to be attached to the machine (5) be means of a hook of one piece with the said machine (5).

8. An apparatus according to claim 6 or claim 7, characterized in that during manoeuvring of the machine (5) the connecting member exerts traction continuously on the machine (5) in order to increase its stability.

9. An apparatus according to any one of claims 1 to 8, characterized in that the hauling mechanism comprises, for each rail (7), two winches (8, 10) arranged along the axis of the guide rail (7) of the carriage (12), at each end of the path of the machine (5), and two cables (9 and 11) each rolled around one of the two winches and such that one of the cables is intended to be attached to a fastening point (26) on the front of the machine (5) so as to move this latter from one zone to the other when the corresponding winch functions as a hauling winch, while the other cable is intended to be attached to a fastening point (27) at the rear of the machine (5) so as to move this latter in the reverse direction when the corresponding winch functions as a hauling winch.

10. An apparatus according to claim 9, characterized in that the two cables (9 and 11) are attached to the machine (5) and are constantly taut while one of the winches (8, 10) operates as a hauling winch and the other operates as a restraining winch.

11. An apparatus according to any one of claims 1 to 10, combined with a deck-landing aid of the grid-harpoon type, characterized in that it also comprises a connecting rail which allows the carriage (12) to come sufficiently close to the machine (5) for the connecting member (16) to be attached to the machine when the machine's harpoon (10) is attached to the grid (4) in the platform in a zone away from the guide rail (7).

1/9

Fig.1

Fig.2

Fig.3

Fig.4

Fig.5

Fig.6

_Fig.7_

_Fig.8_

Fig.9

0 103 519

Fig.9a

0 103 519

0 103 519

_Fig.10_

_Fig.11_

_Fig.12_

_Fig.13_

0 103 519

_Fig. 16_

_Fig. 17_